# EUROPÄISCHE PATENTSCHRIFT

(11) **EP 1 078 163 B1**
(45) Veröffentlichungstag und Bekanntmachung des Hinweises auf die Patenterteilung: **13.08.2003**
(21) Anmeldenummer: 99932670.5
(22) Anmeldetag: 10.05.1999
(51) Int. Cl.: F02P 5/152

(54) **VERFAHREN ZUR ZÜNDSTEUERUNG**
IGNITION CONTROL METHOD
PROCEDE DE COMMANDE D'ALLUMAGE

(30) Priorität: 12.05.1998 DE 19821132; 13.10.1998 DE 19847023
(43) Veröffentlichungstag der Anmeldung: 28.02.2001
(73) Patentinhaber: ROBERT BOSCH GMBH, 70442 Stuttgart (DE)
(72) Erfinder: FRANKE, Steffen, Denham Uxbridge Middlesex (GB); TORNO, Oskar, D-71701 Schwieberdingen (DE); KLUTH, Carsten, D-70469 Stuttgart (DE); HAEMING, Werner, D-74861 Neudenau (DE); SURJADI, Iwan, D-71665 Vaihingen (DE); BAEUERLE, Michael, D-71706 Markgroeningen (DE)
(86) Internationale Anmeldenummer: DE9901404
(87) Internationale Veröffentlichungsnummer: WO99058849

(56) Entgegenhaltungen:
- US-A- 4 357 918
- US-A- 4 640 249
- US-A- 4 736 723
- PATENT ABSTRACTS OF JAPAN vol. 016, no. 299 (M-1274), 2. Juli 1992 (1992-07-02) & JP 04 081575 A (MITSUBISHI MOTORS CORP), 16. März 1992 (1992-03-16)

## Beschreibung

### Stand der Technik

Die Erfindung betrifft ein Verfahren zur Bestimmung der Zündsteuergrößen für eine Brennkraftmaschine bei auftretender Beschleunigung.

Aus der US 46 40 249 ist bereits ein Verfahren zur Zündsteuerung für eine Brennkraftmaschine beim Auftreten von Lastdynamik bekannt, bei dem festgestellt wird, ob eine Dynamik, d. h. ein transienter Zustand, vorliegt.

Ein Verfahren zur Bestimmung der Zündsteuergrößen für eine Brennkraftmaschine ist auch bereits aus "Bosch Technische Unterrichtung, Kombiniertes Zünd- und Benzineinspritzsystem mit Lambda-Regelung, Motronic" (1987722011, KH/VDT-09.895-DE) bekannt.

Bei diesem bekannten Zündsteuergerät werden die verschiedenen Betriebsparameter wie beispielsweise Drehzahl, Last, Druck, Temperatur mittels entsprechender Sensoren an der Peripherie der Brennkraftmaschine erfaßt und anschließend an das Steuergerät weitergeleitet. Die Verarbeitung der erfaßten Sensorsignale erfolgt in zugeordneten Sensorsignalaufbereitungsschaltungen bzw. - einheiten, wobei diese Aufbereitungsschaltungen sowohl außerhalb des Steuergerätes als auch im Steuergerät selbst angeordnet sein können. Eine Recheneinheit des Steuergerätes bestimmt dann u.a. aufgrund der vorliegenden Signale vorzugsweise aufgrund des Drehzahlsignals und Lastsignals die entsprechende Zündsteuergröße. Für diese Bestimmung ist im Steuergerät ein Zündkennfeld gespeichert, welches sich über Drehzahl und Last aufspannt. Die Kennfelder wurden beispielsweise vorher in der Applikation entsprechend optimaler Betriebsbedingungen auf einem Motorprüfstand ermittelt. Dieser Bestimmung der Zündsteuergröße ist eine Klopfregelung zugeordnet, die ein Spätziehen des Zündzeitpunktes von der Klopfgrenze weg nach einer klopfenden Verbrennung in diesem Zylinder bewirkt. Weiterhin ist der Zündzeitpunktbestimmung eine additive Verstellung des aus dem Kennfeld entnommenen Zündzeitpunktes zugeordnet, die in Abhängigkeit von auftretender Dynamik den vorher bestimmten Zündzeitpunkt verschiebt. Mit dem Einrechnen eines sogenannten Dynamikvorhaltes wird der Zündzeitpunkt in Richtung spät verschoben. Anschließend wird diese additive Verstellung zeitlich abgeregelt und der Zündzeitpunkt wieder in Richtung Kennfeldzündzeitpunkt verändert. Durch die additive Veränderung wird sichergestellt, daß der Zündzeitpunkt nicht zu dicht an der Klopfgrenze liegt, wodurch ein klopfender Betrieb vermieden wird. Letztendlich bewirkt die Zündzeitpunktanpassung bei Beschleunigung, daß ein maximales Drehmoment bereitgestellt wird. Bei einer sehr starken Beschleunigung, die zu einer sprungartigen Änderung des Zündzeitpunkts und damit einem Verschlechtern des Fahrverhaltens führen würde, wird diese Änderung zeitlich langsam durchgeführt und nur in Fällen, in denen eine rasche Änderung zwingend erforderlich ist, z.B. beim Übergang von Teillast nach Vollast läßt das Steuergerät eine schnelle sprungartige Änderung zu.

### Vorteile der Erfindung

Das erfindungsgemäße Verfahren mit den Merkmalen des Hauptanspruchs hat gegenüber dem Bekannten den Vorteil, daß durch die Einführung einer zweiten Dynamikschwelle, ab welcher eine Adaption des Dynamikvorhaltes nach Früh erfolgt, der Betrieb der Brennkraftmaschine den Anforderungen, daß eine niedrige Dynamikschwelle für die Ausgabe des Vorhaltes und eine hohe Dynamikschwelle für die Adaption nach Früh festzulegen ist, gerecht wird. Dadurch ist ein verbessertes Zusammenwirken von Adaption und Ausgabe des Dynamikvorhaltes und damit dessen Wirksamkeit gegeben.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, die beiden Dynamikschwellen in der Applikation zu ermitteln und in einem Speicher abzulegen. Ein weiterer Vorteil ergibt sich in dem Ablegen des auszugebenden Dynamikvorhaltes beim Überschreiten der ersten Dynamikschwelle in einem Kennfeld, welches sich über Last und Drehzahl aufspannt. Damit kann die Veränderung des Zündzeitpunkts sehr gut an den aktuellen Betriebszustand angepaßt werden. Ein weiterer Vorteil ergibt sich letztendlich in der schrittweisen Rückführung der Adaption des Dynamikvorhaltes nach Früh, da sich hierbei ein weicheres Fahrverhalten und damit ein höherer Fahrkomfort ergibt.

### Zeichnung

Ausführungsbeispiel der Erfindung sind in der Zeichnung dargestellt und in der nachfolgenden Beschreibung näher erläutert. Es zeigen:

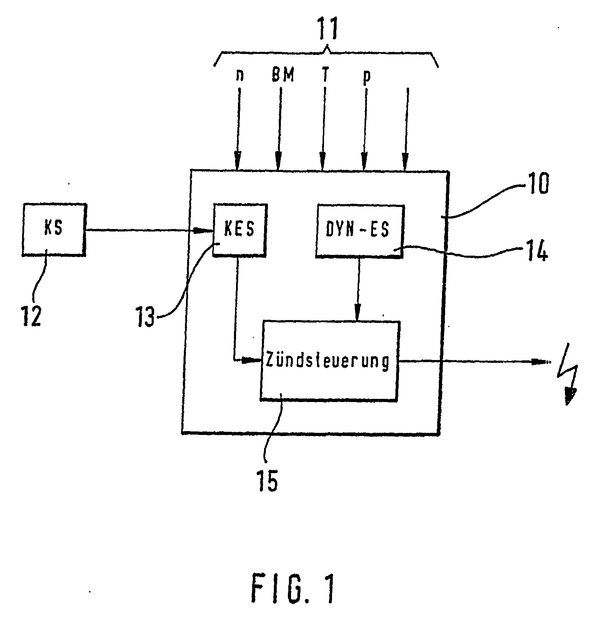

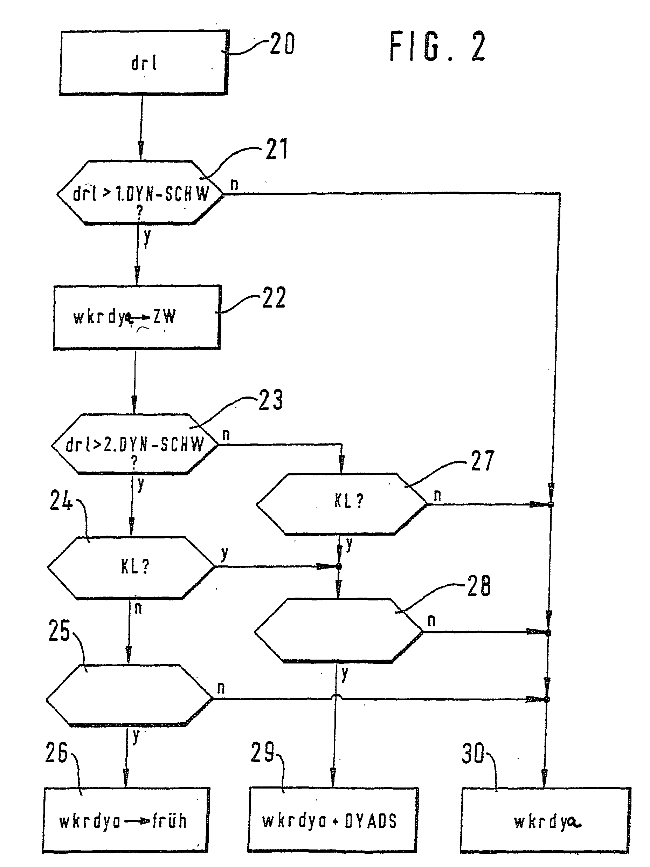

Figur 1 einen Prinzipaufbau des Steuergerätes zur Durchführung des erfindungsgemäßen Verfahrens und Figur 2 einen Programmablaufplan zur Durchführung des erfindungsgemäßen Verfahrens. Beschreibung der Ausführungsbeispiele

Figur 1 zeigt den Prinzipaufbau einer Steuereinheit zur Bestimmung der Zündsteuergröße. Einem Steuergerät 10 sind hier die von Sensoren erfaßten Betriebsparameter wie Drehzahl n, Bezugsmarke BM, Temperatur T, Druck p usw. als Eingangsgrößen 11 zugeführt. Dem Steuergerät 10 ist weiterhin das Signal mindestens eines Klopfsensors KS 12 zugeführt. Im Steuergerät 10 sind Mittel 13 zur Klopferkennung vorgesehen, an die das Klopfsignal geführt ist. Die Erkennung, ob eine klopfende Verbrennung aufgetreten ist, erfolgt in bekannter Art und Weise durch Vergleich mit einem normierten Referenzpegel wie das bereits in zahlreichen Veröffentlichungen beschrieben ist, so daß hier nicht nochmals im Detail darauf eingegangen werden soll. Im Steuergerät ist weiterhin eine Dynamikerkennungsstufe 14 vorgesehen, die beispielsweise das Drehzahlsignal n oder die Stellung der Drosselklappe auswertet und so ermittelt, ob sich die Brennkraftmaschine in dem Zustand der Dynamik befindet. Im Steuergerät 10 ist weiterhin eine Zündsteuereinheit 15 angeordnet, deren Ausgangssignal an eine externe Endstufe, die in Figur 1 nicht explizit angegeben ist, geführt wird. Im Steuergerät 15 wird wie eingangs beschrieben an Hand der aktuellen Betriebsparameter aus einem Kennfeld der Zündzeitpunkt entnommen und dann die Endstufe entsprechend angesteuert. Wurde in dem anzusteuernden Zylinder eine klopfende Verbrennung ermittelt, so erfolgt eine zylinderindividuelle Spätverstellung des Zündzeitpunkts für diesen Zylinder. Nach einer vorgebbaren Anzahl klopffreier Verbrennungen in diesem Zylinder wird der Zündzeitpunkt wieder an den Kennfeldzündzeitpunkt schrittweise zurückgeführt. Die Erfassung eines dynamischen Zustandes erfolgt in der Dynamikerkennungsstufe 14. Dieser Zustand Dynamik wird beispielsweise über den Öffnungswinkel der Drosselklappe erfaßt und so festgestellt, ob der Fahrer eine Laständerung einleiten will.

Figur 2 zeigt den prinzipiellen Ablaufplan der Zündsteuerung bei auftretender Dynamik. In einem ersten Arbeitsschritt 20 wird der aktuelle Lastgradient drl erfaßt. Dieser Lastgradient drl wird in einer nachgeordneten Abfrage 21 mit einem ersten vorgebbaren Dynamikschwellwert 1.DYN-SCHW verglichen. Ist der Lastgradient drl größer als dieser erste vorgebbare Dynamikschwellwert, also drl > 1.DYN-SCHW, so führt der JA-Ausgang der Abfrage 21 an einen Arbeitsschritt 22. In diesem Arbeitsschritt 22 wird aus einem Speicher ein Dynamikvorhalt wkrdya ausgelesen, der auf den aktuellen Zündwinkel ZW aufaddiert wird, so daß die Zündsteuergröße um diesen Dynamikvorhalt wkrdya in Richtung spät verändert wird. Diese additive Spätziehung der Zündung erfolgt für alle Zylinder der Brennkraftmaschine.

Anschließend wird in einer Abfrage 23 geprüft, ob der im Arbeitsschritt 20 erfaßte Lastgradient drl größer ist als eine zweite vorgebbare Dynamikschwelle 2.DYN-SCHW. Für den Fall, daß drl > 2.DYNSCHW ist, führt der JA-Ausgang an eine Abfrage 24, in welcher geprüft wird, ob mit dem aktuell ausgegebenen Zündwinkel ein Klopfen KL aufgetreten ist. Konnte kein Klopfvorgang bei den ausgewerteten Verbrennungen der Dynamikphase ermittelt werden, so führt der Nein-Ausgang der Abfrage 24 an eine Abfrage 25. Hier·wird geprüft, ob bereits eine vorgebbare Anzahl klopffreier Verbrennungen mit durch die Klopfregelung bestimmter Zündsteuergröße stattgefunden hat. Ist dies der Fall, so wird in einem dem Ja-Ausgang nachgeordneten Arbeitsschritt 26 der ausgegebene Dynamikvorhalt wkrdya jeweils um ein Inkrement verkleinert, so daß die Zündung wieder in Richtung früh und damit näher an die Klopfgrenze heran verstellt wird. Ein Betrieb näher an der Klopfgrenze bedeutet auch ein besseres Drehmoment und damit einen höheren Wirkungsgrad.

Wurde die Abfrage 23, ob der Lastgradient auch die zweite vorgebbare Dynamikschwelle 2.DYN-SCHW überschritten hat, verneint, so führt der Nein-Ausgang dieser Abfrage 23 an eine Abfrage 27, in welcher wiederum die Verbrennungen auf der Dynamikphase auf auftretendes Klopfen hin überwacht werden. Wurde ein Klopfen KL ermittelt, so führt der Ja-Ausgang der Abfrage 27 ebenso wie der Ja-Ausgang der Abfrage 24 an eine nachgeordnete Abfrage 28. Hier wird nun ein Bewertung des ermittelten Klopfereignisses KL in der Art vorgenommen, daß die Stärke des Klopfereignisses erfaßt und bewertet wird. Bei einem Klopfereignis, das eine vorgebbare Stärke überschritten hat, wird in einem nachgeordneten Arbeitsschritt 29 der aktuell verwendete Dynamikvorhalt wkrdya um einen vorgebbaren Betrag vergrößert, so daß die Zündung insgesamt nach spät gezogen wird.

Letztendlich sind die Nein-Ausgänge der Abfrage 21, d.h. der Lastgradient drl ist kleiner als die erste Dynamikschwelle 1.DYN-SCHW, der Abfrage 27, d.h. es ist kein Klopfen ermittelt worden, der Abfrage 28, d.h. das ermittelte Klopfen war nur schwach, und der Abfrage 25, d.h. es wurde nur eine einzelne oder sehr wenige klopffreie Verbrennungen ermittelt, an einen Arbeitsschritt 30 geführt. Hier wird festgelegt, daß der im Speicher abgelegte Dynamikvorhalt wkrdya beibehalten wird. Anschließend wird der Programmablaufplan zur Auswertung der nächsten Dynamikphase, wobei eine Dynamikphase aus einer vorgebbaren Anzahl von Verbrennungszyklen besteht, von neuem durchlaufen. Die Adaption selbst erfolgt einmal pro Dynamikphase.

Bei auftretender Lastveränderung also im Dynamikfall, ist es notwendig, den Zündzeitpunkt so zu verstellen, daß ein maximales Drehmoment gegeben ist. Dies bedeutet im konkreten Fall, daß die Zündsteurgröße nach früh verstellt werden muß. Gleichzeitig hat eine sehr starke Frühverstellung der Zündsteuergröße eine Zunahme der Klopfneigung zur Folge. Mit dem erfindungsgemäßen Verfahren wird daher eine Möglichkeit geschaffen, die sich widersprüchlich entgegenstehenden Forderungen nach einem klopffreien Betrieb der Brennkraftmaschine und einem möglichst hohen Drehmoment für einen guten Wirkungsgrad der Brennkraftmaschine geschickt miteinander zu verknüpfen.

Durch die Definition einer ersten Dynamikschwelle für den Lastgradienten wird sichergestellt, daß nicht bereits kleinste kurzzeitige Laständerungen zu einem Verstellen der Zündung in Richtung spät führt. Damit bleibt ein hoher Wirkungsgrad gewährleistet. Der nach dem überschreiten der ersten Dynamikschwelle ausgegebene Dynamikvorhalt wird beim erfindungsgemäßen Verfahren anhand der aktuellen Betriebsbedingungen adaptiert und dann jeweils, bis eine Veränderung des Dynamikvorhaltes notwendig ist, in einem Speicher abgelegt, so daß er bei einem erneuten Betrieb der Brennkraftmaschine in diesem Bereich, aus dem Speicher ausgelesen und zum Spätziehen der Zündung verwendet werden kann. Für die Adaption des Dynamikvorhaltes unterscheidet man zwei Möglichkeiten. Zum einen kann der Dynamikvorhalt vergrößert werden, was bedeutet, daß die Zündung weiter nach spät gezogen wird, oder der Dynamikvorhalt kann verkleinert werden, was bedeutet, daß die Zündung nach früh in Richtung Klopfgrenze verschoben wird. Ein Verkleinern des Dynamikvorhaltes erfolgt, wenn der Lastgradient die zweite Dynamikschwelle überschritten hat und eine vorgebbare Anzahl klopffreier Verbrennungen stattgefunden hat. In diesem Fall geht man davon aus, daß der durch den Dynamikvorhalt bewirkte "Sicherheitsabstand" zur Klopfgrenze zu groß ist und die Zündung schrittweise in Richtung früh verstellt werden kann. Wurde die zweite Dynamikschwelle vom Latgradienten nicht überschritten, dann ist die Stärke von auftretenden Klopfereignissen zu prüfen. Für den Fall, daß eine sehr starke Klopfneigung gegeben ist, wird der Dynamikvorhalt vergrößert, so daß die Zündung weiter nach spät und damit von der Klopfgrenze weg gezogen wird.

## Patentansprüche

1. Verfahren zur Zündsteuerung für eine Brennkraftmaschine bei Auftreten der Lastdynamik mit folgenden Schritten:
- Ermitteln einer Zündsteuergröße aus einem abgespeicherten Kennfeld aufgrund erfasster Betriebsparameter,
- Erfassen des Lastgradienten (drl),
- Vergleich des erfassten Lastgradienten mit einer vorgebbaren ersten Dynamikschwelle (1.DYN-SCHW) und Ausgabe eines vorgebbaren Dynamikvorhalts (wkrdya), der die Zündsteuergröße in Richtung Spät verändert, wenn der Lastgradient die vorgebbare erste Dynamikschwelle (1.DYN-SCHW) überschreitet,
**dadurch gekennzeichnet, dass**
- ein Vergleich des erfassten Lastgradienten (drl) mit einer vorgebbaren zweiten Dynamikschwelle (2.DYN-SCHW) vorgenommen wird, wobei die zweite Dynamikschwelle größer ist als die erste Dynamikschwelle (2.DYN-SCHW > 1.DYN-SCHW), und eine schrittweise Adaption des Dynamikvorhaltes (wkrdya) erfolgt, so dass die Zündsteuergröße in Richtung Früh verändert wird, wenn der Lastgradient die vorgebbare zweite Dynamikschwelle (2.DYN-SCHW) überschreitet und wenn ein vorgebbarer Anteil klopffreier Verbrennungen in der Dynamikphase vorliegt.

2. Verfahren zur Zündsteuerung nach Anspruch 1, **dadurch gekennzeichnet, daß** bei Auftreten von Klopfereignissen (KL), die eine vorgebbare Klopfstärke überschreiten, der Dynamikvorhalt (wkrdya) schittweise vergrößert wird.

3. Verfahren zur Zündsteuerung nach einem der vorherigen Ansprüche, **dadurch gekennzeichnet, daß** die erste und zweite Dynamikschwelle in der Applikation ermittelt werden.

4. Verfahren zur Zündsteuerung nach einem der vorherigen Ansprüche, **dadurch gekennzeichnet, daß** der Dynamikvorhalt (wkrdya) aus einem Kennfeld entnommen wird.

5. Verfahren zur Zündsteuerung nach einem der vorherigen Ansprüche, **dadurch gekennzeichnet, daß** der adaptierte Dynamikvorhalt (wkrdya) jeweils als neuer gelernter Wert im Speicher abgelegt wird.

## Claims

1. Method for ignition control for an internal combustion engine in the event of a change in load, having the following steps:
- determination of an ignition control variable from a stored characteristic map on the basis of detected operating parameters,
- acquisition of the load gradient (drl),
- comparison of the acquired load gradient with a specifiable first dynamic threshold (1.DYN-SCHW) and outputting of a specifiable dynamic lead (wkrdya) that retards the ignition control variable if the load gradient exceeds the specifiable first dynamic threshold (1.DYN-SCHW),
**characterized in that**
- a comparison of the acquired load gradient (drl) with a specifiable second dynamic threshold (2.DYN-SCHW) is performed, the second dynamic threshold being greater than the first dynamic threshold (2.DYN-SCHW>1.DYN-SCHW), and stepwise adaptation of the dynamic lead (wkrdya) takes place, resulting in advancing of the ignition control variable if the load gradient exceeds the specifiable second dynamic threshold (2.DYN-SCHW) and if there is a specifiable proportion of knock-free combustions in the dynamic phase.

2. Method for ignition control according to Claim 1, **characterized in that** the dynamic lead (wkrdya) is increased in steps if knock events (KL) that exceed a specifiable knock intensity occur.

3. Method for ignition control according to one of the preceding claims, **characterized in that** the first and the second dynamic threshold are determined by application.

4. Method for ignition control according to one of the preceding claims, **characterized in that** the dynamic lead (wkrdya) is taken from a characteristic map.

5. Method for ignition control according to one of the preceding claims, **characterized in that** the adapted dynamic lead (wkrdya) is in each case stored in the memory as a new learned value.

## Revendications

1. Procédé de commande d'allumage pour un moteur à combustion interne en cas d'apparition de la dynamique de charge, qui comprend les étapes suivantes:
- recherche d'une grandeur de commande d'allumage dans un diagramme mémorisé sur la base de paramètres de fonctionnement détectés,
- détection du gradient de charge (drl),
- comparaison du gradient de charge capté avec un premier seuil de dynamique pouvant être prédéterminé (1.DYN-SCHW) et sortie d'une certaine dérivation de dynamique pouvant être prédéterminée (wkrdya), qui modifie la grandeur de commande d'allumage en direction du retard lorsque le gradient de charge devient supérieur au premier seuil de dynamique pouvant être prédéterminé (1.DYN-SCHW),
**caractérisé en ce que**
- une comparaison du gradient de charge (drl) détecté avec un deuxième seuil de dynamique pouvant être prédéterminé (2.DYN-SCHW) est exécutée, le deuxième seuil de dynamique étant supérieur au premier seuil de dynamique (2.DYN-SCHW > 1.DYN-SCHW) et il se produit une adaptation par pas successifs de la dérivation de dynamique (wkrdya), de sorte que la grandeur de commande d'allumage est modifiée en direction de l'avance lorsque le gradient de charge devient supérieur au deuxième seuil de dynamique pouvant être prédéterminé (2.DYN-SCHW) et lorsqu'une proportion pouvant être prédéterminée de combustions sans cliquetis est présente dans la phase dynamique.

2. Procédé de commande d'allumage selon la revendication 1,
**caractérisé en ce qu'**
en cas d'apparition d'événements de cliquetis (KL) qui sont supérieurs à un niveau de cliquetis pouvant être prédéterminé, la dérivation de dynamique (wkrdya) est agrandie par pas successifs.

3. Procédé de commande d'allumage selon une des revendications précédentes,
**caractérisé en ce que**
les premier et deuxième seuils de dynamique sont obtenus dans l'application.

4. Procédé de commande d'allumage selon une des revendications précédentes,
**caractérisé en ce que**
la dérivation de dynamique (wkrdya) est tirée d'un diagramme.

5. Procédé de commande d'allumage selon une des revendications précédentes,
**caractérisé en ce que**
la dérivation de dynamique adaptée (wkrdya) est enregistrée à chaque fois dans la mémoire en tant que nouvelle valeur apprise.
